# FASCICULE DE BREVET EUROPEEN

(11) **EP 0 506 987 B1**
(45) Date de publication et mention de la délivrance du brevet: **11.01.1995**
(21) Numéro de dépôt: 91105129.0
(22) Date de dépôt: 30.03.1991
(51) Int. Cl.: A23G 9/22

(54) **Procédé et appareil de fabrication d'un article de confiserie glacée**
Verfahren und Vorrichtung zur Herstellung von Eiskonfekt
Process and apparatus for producing a frozen confection

(43) Date de publication de la demande: 07.10.1992
(73) Titulaire: FRISCO-FINDUS AG, CH-9400 Rorschach (CH)
(72) Inventeur: Cathenaut, Philip Igor, F-60000 Beauvais (FR); Wendelin, Friedrich, ES-08759 Vallirana (Barcelona) (ES)

(56) Documents cités:
- US-A- 4 986 080

## Description

L'invention concerne un procédé et un appareil de fabrication d'un article de confiserie glacée décoré du genre des sucettes de glace à l'eau, de sorbet ou de crème glacée bi-parfum.

Par la suite, le terme générique de "glace" utilisé sans autre précision désignera les différences compositions précédentes.

Dans le domaine des articles d'impulsion tels que les sucettes glacées, les consommateurs manifestent le désir de disposer de nouvelles formes ou de nouveaux motifs décoratifs. Les glaces à l'eau se prêtent particulièrement bien à la réalisation de motifs contrastés de différentes couleurs du fait que l'absence ou le faible foisonnement du mélange à congeler confère à l'article un aspect brillant en surface.

Un motif attractif est constitué par des rayures longitudinales contrastées. Pour réaliser un tel motif, par exemple selon le brevet US-A 4.986.080 on propose de confectionner un noyau congelé d'un premier mélange pour glace à l'eau d'un premier parfum d'une couleur au moyen d'un premier moule de forme générale tronco-cylindrique laissant en creux des gorges longitudinales, par exemple en hélice comme illustré à la surface du bâtonnet. On introduit ensuite ce noyau dans un second moule de même section que le premier mais sans gorge, puis on remplit les interstices entre le noyau et le second moule avec un mélange liquide pour glace à l'eau d'un second parfum d'une autre couleur, contrastée par rapport à la couleur précédente, on congèle ce mélange, puis on démoule l'article. Etant donné les dimensions réduites des sucettes et la présence des bâtonnets de préhension, le dosage du second parfum dans les gorges est très délicat à réaliser sans éclaboussures. De plus, comme il n'est pas possible en pratique de le doser exactement dans les interstices, on préfère introduire un excès de liquide susceptible de les remplir par gravité et on obtient des produits sans affleurement des rayures en haut. Enfin, du fait que le mélange dosé est liquide, il peut s'introduire entre la paroi du second moule et le noyau qui n'est pas toujours exactement ajusté à ce moule en débordant des gorges sous forme d'un film qui, l'article une fois congelé, produit dans ce cas un voile nuisant à la netteté des contrastes.
L'invention se propose de remédier aux inconvénients de l'état de la technique en mettant à disposition un procédé et une installation permettant la fabrication de sucettes glacées bi-parfum décorées du type précédent ainsi que d'autres types non réalisables par le procédé connu, avec des rayures nettement contrastées.

Le procédé selon l'invention est caractérisé par le fait que l'on produit le noyau congelé dans un premier moule tronco-cylindrique cannelé, puis que l'on introduit ce noyau comme contre-moule dans un second moule tronco-cylindrique, de même section que celle dans laquelle s'inscrit le contre-moule, lequel second moule a été préalablement partiellement rempli du mélange pour glace du second parfum, de sorte que le contre-moule le fait remonter dans les interstices en creux pour former des rayures.

De préférence, on remplit partiellement le second moule, par exemple à 1/4-3/4 et de préférence 1/4-1/3 de son volume peu après l'extraction du noyau.

Dans un mode de réalisation préféré du procédé, le premier moule a sensiblement la même longueur et la même conicité que le second moule et le premier moule s'inscrit dans une section supérieure à celle du second moule tenant compte de la perte de surface par fusion au démoulage du noyau. De cette manière, le noyau peut descendre exactement jusqu'au fond du second moule et être appliqué sans jeu contre sa paroi intérieure. Il en résulte des rayures sur toute la longueur de la sucette.

Il est possible, bien que cela ne soit pas préféré, que le noyau une fois démoulé, ait une section légèrement supérieure à celle du second moule et soit légèrement plus court que celui-ci tout en gardant la même conicité. Dans ce cas, le noyau touche la paroi interne du second moule sans descendre complètement jusqu'au fond. Cela ne présente pas un réel inconvénient et dans ce cas l'extrémité de la sucette sera monochrome sans rayures. Dans une variante de ce cas de figure, le noyau est plus court que le second moule mais a la même section. Dans ce cas, le noyau descend jusqu'au fond du second moule et est appliqué contre sa paroi interne mais il reste un espace en haut du moule qui peut être rempli du second parfum. On a alors le cas de figure inverse c'est-à-dire une tranche monochrome à l'extrémité de la sucette proche du bâtonnet.

Selon une variante du procédé conduisant à des motifs avec rayures en croix, on remplit partiellement le premier moule avec le mélange du premier parfum que l'on congèle, on dose ensuite une tranche du mélange du second parfum que l'on congèle, puis on complète le remplissage avec le mélange du premier parfum que l'on congèle également après y avoir inséré un bâtonnet. On peut ensuite utiliser ce noyau comme contre-moule en l'introduisant dans un deuxième moule préalablement rempli partiellement du mélange du second parfum.

Une fois l'article démoulé, on peut réaliser un glaçage de surface, par trempage dans l'eau ou pulvérisation d'eau de manière à lui donner un aspect brillant.

L'invention concerne également un appareil pour fabriquer un article de confiserie glacée bi-parfum du genre des sucettes de glace décorées comprenant un bac de congélation à travers lequel cheminent deux pas à deux pas des rangées alternées de moules d'un premier type A et d'un second type B, un poste de remplissage des moules A, un poste d'insertion de bâtonnets dans les moules A, un poste de réchauffement superficiel des moules A, un poste de transfert des noyaux congelés des moules A dans les moules B, un poste de remplissage partiel des moules B, un poste de réchauffement superficiel des moules B et un poste d'évacuation de l'article, caractérisé par le fait que le poste de remplissage partiel des moules B est placé entre l'extraction des noyaux congelés et leur dépose dans les moules B, vu dans le sens de cheminement des moules.

La description détaillée ci-après faite en regard des dessins annexés illustre l'invention.
Dans les dessins:
la figure 1 est un schéma de l'appareil montrant les différents postes de fabrication d'une sucette à rayures,
la figure 2 est un schéma de détail du poste 6 de la figure 1 d'insertion du noyau dans le second moule,
la figure 3 est un schéma de fabrication d'une sucette avec motif en croix,
la figure 4 illustre un bâtonnet rayé obtenu selon le schéma de la figure 1 et
la figure 5 montre un bâtonnet en croix obtenu selon le schéma de la figure 3.

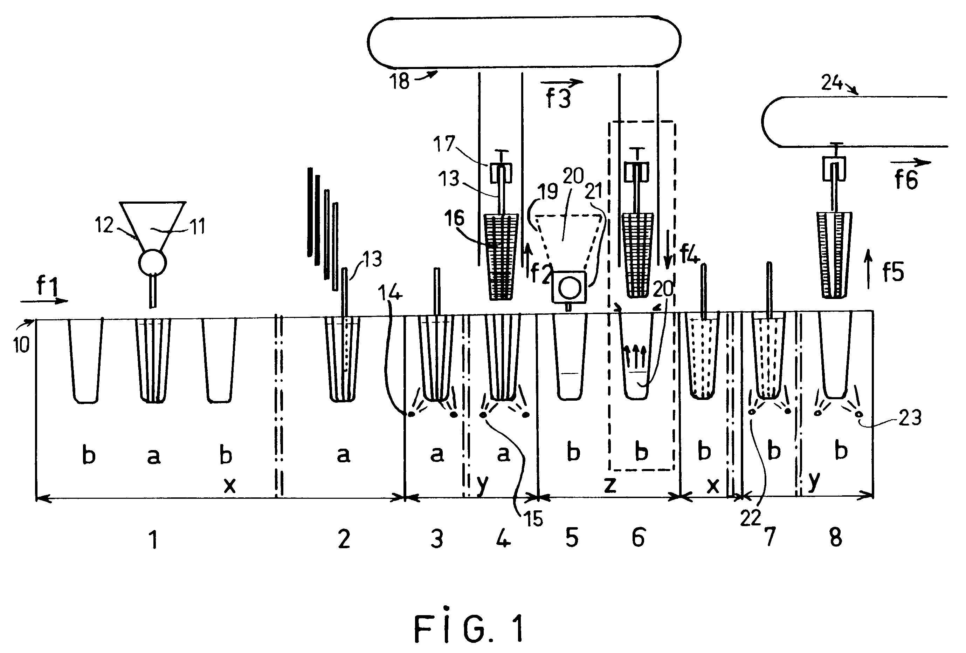

A la figure 1, l'appareil comprend des zones de congélation X, des zones de réchauffement superficiel Y et une zone intermédiaire hors congélation et sans moyens de réchauffement Z à travers lesquelles des rangées successives alternées de moules A et B de nature différente cheminent de gauche à droite suivant la flèche f1 par le mouvement de translation intermittent de 2 pas à 2 pas de la chaîne sans fin 10, étant entendu qu'un pas est constitué par la distance entre 2 moules consécutifs.

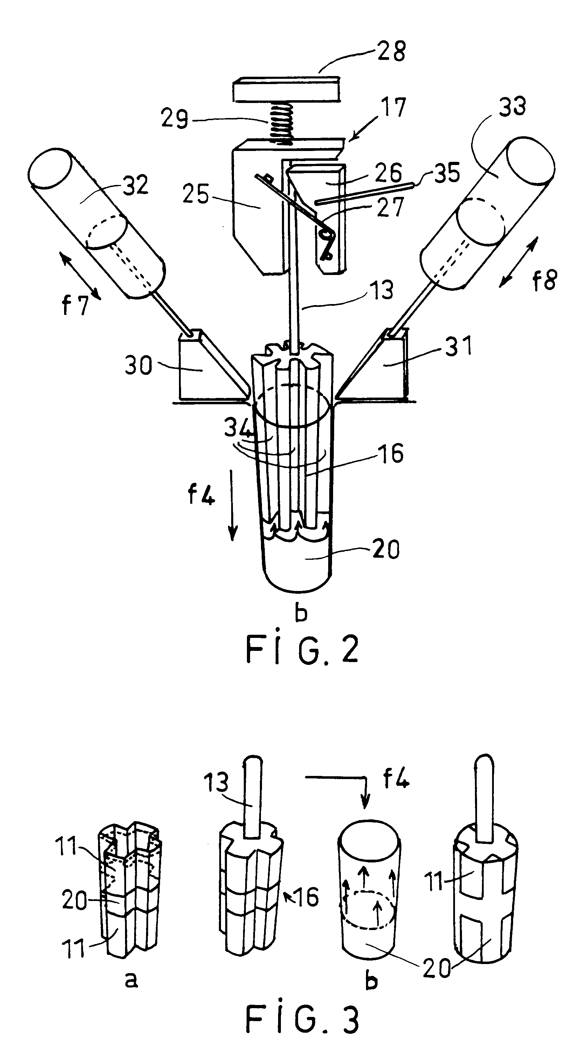

Ainsi, un moule A cannelé, de forme tronco-cylindrique se présente successivement sous les postes 1 à 4. De même, un moule B de forme tronco-cylindrique, de même conicité mais de section légèrement plus faible que le moule A se présente successivement sous les postes 5 à 8.
Au poste 1, on remplit presque complètement un moule A avec un mélange pour glace 11 par la trémie 12. Sous l'effet du milieu de congélation, le mélange commence à se solidifier et on y insère un bâtonnet 13 au poste 2. Comme indiqué sur la figure, les postes 1 et 2 ne sont pas distants de 2 pas mais d'un nombre pair de pas plus élevé tenant compte du temps nécessaire pour procurer au mélange la viscosité nécessaire en 2 pour que le bâtonnet puisse être introduit et rester en position. En 3, le moule A a quitté la zone de congélation pour être réchauffé en surface par les jets d'eau ou de saumure chaude 14, puis en 4 les jets d'eau chaude 15 à la surface du moule permettent le démoulage du noyau 16 qui est extrait du moule verticalement suivant f2 par son bâtonnet 13 au moyen de la pince 17. La chaîne sans fin 18 transporte ensuite le noyau 16 horizontalement suivant f3 jusqu'à la verticale du poste 6. Au poste 5, on dose à partir de la trémie 19 un mélange pour glace 20 par le boisseau 21 dans le moule B situé en dessous, environ du 1/4 au 1/3 de son volume. La trémie 20 est représentée en pointillé pour indiquer qu'elle est en retrait par rapport à la chaîne sans fin 18, de manière à ne pas faire obstacle au transport du noyau 16 du poste 4 au poste 6. La trémie 20 est reliée au boisseau 21 par un tube souple non visible sur la figure.
Aux postes 5 et 6, le moule B se trouve dans une zone hors congélation Z constituée de l'air froid ambiant. En 6, le noyau descend dans le moule B ce qui fait remonter le mélange 20 dans les parties creuses des cannelures du noyau comme cela sera expliqué plus en détail ci-après en liaison avec la figure 2. Les opérations aux postes 5 et 6 se déroulent rapidement, en quelques secondes. Le moule B se déplace ensuite dans une zone X jusqu'à prise en masse complète, puis passe dans une zone Y où il est réchauffé superficiellement au poste 7 par projection d'eau ou de saumure chaude en jets 22. En 8, la sucette est extraite du moule B réchauffé en surface par les jets d'eau ou de saumure chaude 23, verticalement suivant la flèche f5, puis évacué suivant f6 par la chaîne sans fin 24.
La sucette peut alors être trempée dans l'eau froide pour lui appliquer un glaçage de surface, par exemple au moyen d'un bac utilisé ordinairement pour appliquer une couverture chocolatée, puis enveloppée par exemple en "flow-pack", ces opérations n'étant pas représentées. A la figure 2, le noyau cannelé 16 descend dans le moule B selon la flèche f4 par l'intermédiaire du bâtonnet 13 pincé entre les mâchoires 25 et 26 de la pince 17 maintenues l'une contre l'autre par le ressort à spirale 27. La pince 17 est montée sur la barre 28 de manière élastique par l'intermédiaire du ressort 29. La barre 28 est reliée à un système de monte et de baisse non représenté. La forme de la mâchoire 26 de la pince 17 est telle que lors de l'extraction, par exemple aux postes 4 et 8 de la figure 1, la pince 17 descend pour prendre un bâtonnet 13 qui se place entre les mâchoires 25 et 26 et ne peut glisser que dans un sens, vers le haut. Dans un mode de réalisation non représenté, la pince 17 ne comporte ni barre 28, ni ressort 29, ni butée, mais le ressort à spirale 27 est suffisamment fort pour que le noyau puisse s'enfoncer jusqu'au fond du moule. Ainsi, si le noyau 16 se bloque au cours de son insertion dans le moule B au poste 6, la pince permet un glissement du bâtonnet vers le haut. Dans la variante représentée, le ressort 29 en coopération avec la butée de la mâchoire 25 permet une insertion du noyau sans jeu jusqu'au fond du moule en fin de course. Les guides en forme de sabot 30 et 31 mis en position par les vérins 32 et 33 selon les flèches f7 et f8 servent à maintenir le moule B en position lorsqu'il est à l'arrêt au poste 6 malgré les vibrations auxquelles la chaîne 10 est soumise entre deux mouvements pas à pas. Les vérins 32 et 33 remontent les sabots en biais pour libérer le moule B une fois complétée l'insertion du noyau. Dans une variante non représentée, il n'y a pas de vérin 32 car, contrairement au guide 31 qui doit se relever au passage du bâtonnet qui dépasse du moule, le guide 30 peut rester en place.

La forme des sabots permet de plus un centrage correct du noyau dans le moule B. A mesure que le noyau 16 descend dans le moule B, le mélange pour glace 20 plus ou moins liquide monte dans les cannelures 34. Le noyau cannelé 16 s'inscrit avec un minimum de jeu dans la section du moule B, car comme indiqué précédemment, la perte de section du noyau par fusion superficielle est compensée par la section plus grande du moule cannelé, dont le rayon est par exemple plus grand de 1 à 2 mm que celui du moule B. La pince 17 comporte un petit levier 35 solidaire de la mâchoire 26 qui permet de libérer le bâtonnet 13 en agissant contre le ressort 27 une fois complétée l'insertion du noyau.

A la figure 3, on remplit le moule A de section cruciforme successivement de mélange pour glace 11 que l'on congèle, de mélange pour glace 20 que l'on congèle et enfin de mélange pour glace 11 par l'intermédiaire de doseuses non représentées. On place un bâtonnet 13 dans le noyau à trois couches 16 ainsi formé, on démoule le noyau 16 et on l'insère dans le moule B ayant été préalablement rempli environ du 1/4 au 1/3 de son volume du mélange pour glace 20. Une fois le mélange 20 congelé, on démoule la sucette et on la traite comme indiqué précédemment .

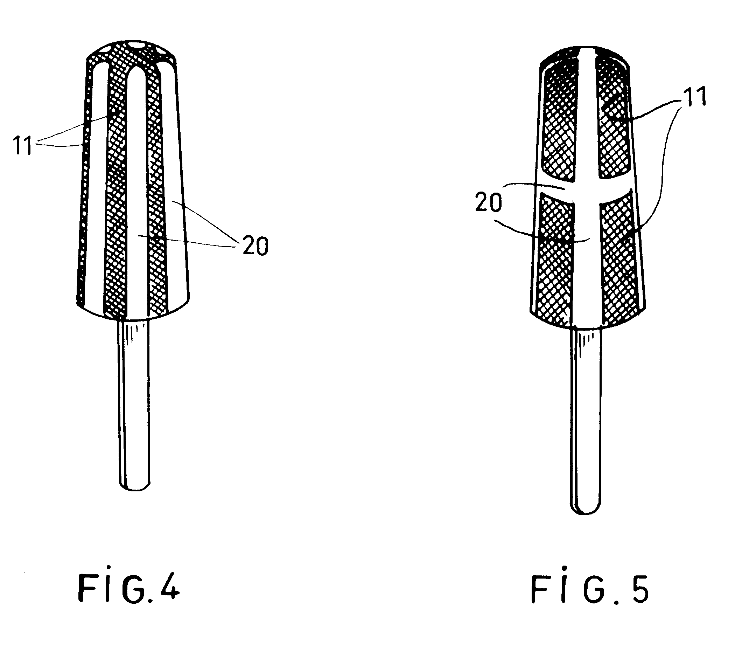

La sucette de la figure 4 a des rayures alternés de glace à l'eau à la fraise rouges 11 et de glace à l'eau au citron blanches 20.

La sucette représentée à la figure 5 à un motif en croix composé de rayures de glace à la fraise rouges 11 et de rayures de glace au citron blanches 20.

Le procédé de l'invention peut être mis en oeuvre de manière optimale par utilisation d'une température de congélation basse dans les zones X, par exemple de -30 à -40°C, d'eau ou de saumure de réchauffage relativement froide, par exemple à 15-20°C dans les zones Y et par le dosage des mélanges pour glace à une température aussi basse que possible compatible avec le dosage, par exemple à 4-6°C, la zone Z étant simplement constituée d'air ambiant, relativement froid, par exemple à 14-15°C du fait de la proximité des zones de congélation, pour une cadence de la chaîne de 15 à 25 coups/min. (c'est-à-dire 2 pas par coup).
De cette manière, on minimise les pertes au démoulage et on réduit les temps de congélation.

Dans la description précédente, on a représenté une machine linéaire. On pourrait bien entendu réaliser la fabrication des sucettes selon l'invention dans une machine à carrousel pourvue des différents postes décrits précédemment.

## Revendications

1. Procédé de fabrication d'un article de confiserie glacée bi-parfum du genre des sucettes de glace décorées, dans lequel on confectionne un noyau congelé d'un premier mélange pour glace d'un premier parfum d'une couleur, puis on introduit ce noyau dans un moule que l'on remplit d'un mélange pour glace d'un second parfum d'une autre couleur que l'on congèle, puis on démoule l'article, caractérisé par le fait que l'on produit le noyau congelé dans un premier moule tronco-cylindrique cannelé, puis que l'on introduit ce noyau comme contre-moule dans un second moule tronco-cylindrique, de même section que celle dans laquelle s'inscrit le contre-moule, lequel second moule a été préalablement partiellement rempli du mélange pour glace du second parfum, de sorte que le contre-moule le fait remonter dans les interstices en creux pour former des rayures.

2. Procédé selon la revendication 1, caractérisé par le fait que l'on remplit le premier moule avec le premier mélange, que l'on congèle le noyau et qu'on le démoule, puis que l'on remplit partiellement le second moule peu après le démoulage du noyau.

3. Procédé selon la revendication 1, caractérisé par le fait que le premier moule a la même conicité que le second moule et que le premier moule s'inscrit dans une section légèrement supérieure à celle du second moule afin de tenir compte de la perte de surface par fusion au démoulage.

4. Procédé selon la revendication 1, caractérisé par le fait que l'on remplit le premier moule avec des couches successives alternées du premier et du second parfum de manière que les rayures définissent un motif en croix.

5. Procédé selon l'une des revendications 1 à 4, caractérisé par le fait qu'une fois démoulé, l'article subit un glaçage de surface à l'eau.

6. Appareil pour fabriquer un article de confiserie glacée bi-parfum du genre des sucettes de glace décorées comprenant un bac de congélation à travers lequel cheminent deux pas à deux pas des rangées alternées de moules d'un premier type A et d'un second type B, un poste de remplissage des moules A, un poste d'insertion de bâtonnets dans les moules A, un poste de réchauffement superficiel des moules A, un poste de transfert des noyaux congelés des moules A dans les moules B, un poste de remplissage partiel des moules B, un poste de réchauffement superficiel des moules B et un poste d'évacuation de l'article, caractérisé par le fait que le poste de remplissage partiel des moules B est placé entre l'extraction des noyaux congelés et leur dépose dans les moules B, vu dans le sens de cheminement des moules.

7. Appareil selon la revendication 6, caractérisé par le fait que le poste de transfert des noyaux est constitué d'une chaîne de transfert dont les maillons comportent des pinces de préhension des bâtonnets que les dites pinces sont solidaires d'un élément de monte et de baisse et que lors de leur insertion dans les moules B, les noyaux sont appliqués contre le fond et la paroi des moules B sans jeu par pression sur les bâtonnets.

8. Appareil selon la revendication 6, caractérisé par le fait qu'il comporte des moyens de guidage des noyaux permettant leur introduction centrée dans les moules B malgré leur vibration.

9. Appareil selon la revendication 6, caractérisé par le fait que le poste de remplissage des moules A est constitué de plusieurs sous-postes permettant le remplissage successif de couches alternées des deux parfums.

10. Appareil selon l'une des revendications 6 à 9, caractérisé par le fait qu'il comporte en sus un poste de glaçage de surface des articles une fois démoulés.

## Claims

1. A process for the production of an article of two-flavoured ice confectionery of the decorated ice lolly type, in which a frozen core is made from a first ice mixture of a first flavour and of one colour, this core is introduced into a mould which is filled with an ice mixture of a second flavour and of another colour which is then frozen and the article is then demoulded, characterized in that the core is produced in a first grooved frustocylindrical mould, after which the core is introduced as a countermould into a second frustocylindrical mould having the same cross-section as that in which the countermould fits, the second mould having been partly filled beforehand with ice mixture of the second flavour so that the countermould causes it to ascend into the recessed interstices to form stripes.

2. A process as claimed in claim 1, characterized in that the first mould is filled with the first mixture, the core is frozen and then demoulded and the second mould is partly filled just after demoulding of the core.

3. A process as claimed in claim 1, characterized in that the first mould has the same conicity as the second mould and in that the first mould fits into a cross-section slightly larger than that of the second mould to allow for the loss of surface by melting during demoulding.

4. A process as claimed in claim 1, characterized in that the first mould is filled with alternate successive layers of the first and second flavour so that the stripes define a cross pattern.

5. A process as claimed in any of claims 1 to 4, characterized in that, after demoulding, the article is iced with water over its surface.

6. A machine for the production of an article of two-flavoured ice confectionery of the decorated ice lolly type comprising a freezing tank through which alternate lines of moulds of a first type A and a second type B pass two steps at a time, a filling station for the moulds A, a stick insertion station for the moulds A, a surface-heating station for the moulds A, a station for transferring the frozen cores from the moulds A to the moulds B, a station for partly filling the moulds B, a surface heating station for the moulds B and a station for removal of the article, characterized in that the station for partly filling the moulds B is positioned between the withdrawal of the frozen cores and their introduction into the moulds B in the direction of travel of the moulds.

7. A machine as claimed in claim 6, characterized in that the station at which the cores are transferred is formed by a transfer chain of which the links comprise clamps for gripping the sticks, in that the clamps are integral with a lifting and lowering system and in that, during their introduction into the moulds B, the cores are applied to the base and to the wall of the moulds B without play by pressure applied to the sticks.

8. A machine as claimed in claim 6, characterized in that it comprises means for guiding the cores to enable them to be centred during their introduction into the moulds B despite their vibration.

9. A machine as claimed in claim 6, characterized in that the station where the moulds A are filled consists of several sub-stations which enable the moulds to be successively filled with alternate layers of two flavours.

10. A machine as claimed in any of claims 6 to 9, characterized in that it additionally comprises a station for icing the articles over their surface after demoulding.

## Patentansprüche

1. Verfahren zur Herstellung von Eiskonfekt mit zwei Geschmacksrichtungen in der Art dekorierter Eisstangen, bei dem ein gefrorener Kern einer ersten Mischung für Eis einer ersten Geschmacksrichtung einer Farbe hergestellt wird, wobei dieser Kern dann in eine Form eingebracht wird, die mit einer Mischung für Eis einer zweiten Geschmacksrichtung einer anderen Farbe gefüllt wird, die eingefroren wird, und danach der Gegenstand aus der Form herausgenommen wird,
**dadurch gekennzeichnet,**
daß der gefrorene Kern in einer ersten gerippten Kegelstumpfform hergestellt wird, dann dieser Kern als Gegenform in eine zweite Kegelstumpfform eingebracht wird mit dem gleichen Querschnitt wie die, in die die Gegenform einbeschrieben werden kann, wobei die zweite Form zuvor teilweise mit der Mischung für Eis einer zweiten Geschmacksrichtung so gefüllt wurde, daß die Gegenform sie in den Hohl-Zwischenräumen aufsteigen läßt, um Streifen zu bilden.

2. Verfahren nach Anspruch 1,
**dadurch gekennzeichnet,**
daß die erste Form mit der ersten Mischung gefüllt wird, wobei der Kern eingefroren wird, dann aus der Form herausgenommen wird und danach die zweite Form etwas später nach der Herausnahme des Kerns aus der Form teilweise gefüllt wird.

3. Verfahren nach Anspruch 1,
**dadurch gekennzeichnet,**
daß die erste Form dieselbe Kegelsteigung wie die zweite Form aufweist, und daß die erste Form in einen Querschnitt etwas größer als der der zweiten Form einbeschrieben werden kann, um den Oberflächenverlust durch Schmelzen bei der Herausnahme aus der Form Rechnung zu tragen.

4. Verfahren nach Anspruch 1,
**dadurch gekennzeichnet,**
daß die erste Form mit aufeinanderfolgenden abwechselnden Schichten der ersten und der zweiten Geschmacksrichtung so gefüllt wird, daß die Streifen ein kreuzförmiges Muster festlegen.

5. Verfahren nach einem der Ansprüche 1-4,
**dadurch gekennzeichnet,**
daß der Gegenstand nach der Herausnahme aus der Form einer Oberflächenglättung mit Wasser unterzogen wird.

6. Vorrichtung zur Herstellung von Eiskonfekt mit zwei Geschmacksrichtungen in der Art dekorierter Eisstangen aufweisend einen Gefriertopf, durch den in Zweier-Schritten abwechselnde Reihen von Gießformen eines ersten Typs A und eines zweiten Typs B führen, eine Füllstation für die Formen A, eine Einsetzstation für Stiele in die Formen A, eine Station zur oberflächlichen Erwärmung der Formen A, eine Transferstation für die gefrorenen Kerne von den Formen A in die Formen B, eine Station zur teilweisen Füllung der Formen B, eine Station zur oberflächlichen Erwärmung der Formen B und eine Station zur Entleerung des Gegenstandes,
**dadurch gekennzeichnet,**
daß die Station zur teilweisen Füllung der Formen B bei Betrachtung in Bewegungsrichtung der Formen zwischen der Herausnahme der gefrorenen Kerne und ihrem Ablegen in die Formen B angeordnet ist.

7. Vorrichtung nach Anspruch 6,
**dadurch gekennzeichnet,**
daß die Transferstation der Kerne aus einer Transferkette gebildet ist, deren Kettenglieder Greifer für die Stiele aufweisen, daß die Greifer mit einem Bauteil zum Anheben und Ablassen fest verbunden sind und daß während ihrer Einsetzung in die Formen B die Kerne ohne Spiel gegen den Boden und die Wand der Formen B durch Druck auf die Stiele angedrückt werden.

8. Vorrichtung nach Anspruch 6,
**dadurch gekennzeichnet,**
daß sie eine Führungseinrichtung für die Kerne aufweist, die deren zentriertes Einführen in die Formen B trotz deren Vibration gestattet.

9. Vorrichtung nach Anspruch 6,
**dadurch gekennzeichnet,**
daß die Füllstation der Formen A aus mehreren Unterstationen gebildet ist, die die aufeinanderfolgende Füllung von abwechselnden Schichten aus zwei Geschmacksrichtungen gestatten.

10. Vorrichtung nach einem der Ansprüche 6-9,
**dadurch gekennzeichnet,**
daß sie weiterhin eine Station zur Oberflächenglättung der Gegenstände nach der Herausnahme aus der Form aufweist.
